# EUROPÄISCHE PATENTANMELDUNG

(11) **EP 1 598 121 A2**
(43) Veröffentlichungstag der Anmeldung: **23.11.2005**
(21) Anmeldenummer: 05002293.8
(22) Anmeldetag: 03.02.2005
(51) Int. Cl.: B08B 7/00, B23K 26/14

(54) **Lasergestütztes Entschichtungsverfahren**

(30) Priorität: 18.05.2004 DE 102004025017; 09.08.2004 US 600063 P
(71) Anmelder: Airbus Deutschland GmbH, 21129 Hamburg (DE)
(72) Erfinder: Engler, Harald, 27733 Delmenhorst (DE); Hönemann, Lothar-Bernhard, 28279 Bremen (DE); Dörr, Tillmann, 28201 Bremen (DE)
(74) Vertreter: Maiwald Patentanwalts GmbH

(57) **Zusammenfassung**

Die vorliegende Erfindung betrifft die Entschichtung eines Bereiches auf einer Oberfläche (20). Zur Entschichtung wird ein gepulster Laserstrahl (36) eingesetzt, der auf den zu entschichtenden Bereich ausgerichtet wird. Der Laserstrahl (36) ist auf das Absorptionsverhalten von einer Beschichtung (30,32,34) eingestellt. Der Entschichtungsprozess von Oberflächen kann damit verbessert werden.

## Beschreibung

Die vorliegende Erfindung betrifft die Entschichtung von Oberflächen. Insbesondere betrifft die Erfindung ein Verfahren zum Entfernen von einer Oberflächenbeschichtung auf einer Oberfläche mittels eines Lasers sowie eine entsprechende Vorrichtung und eine entsprechende Verwendung.

Flugzeuge werden so konstruiert, dass elektrostatische Aufladungen keine Beschädigungen oder Fehlfunktionen von elektrischen Systemen verursachen. Genauso dürfen durch elektrostatische Aufladungen keine Beschädigungen von Strukturen der Flugzeug Rahmenbauteile oder der Flugzeughaut hervorgerufen werden. Eine gute elektrische Leitfähigkeit der Struktur und von Teilen der Ausstattung dient der Abführung von elektrischen Aufladungen und dem guten elektrischen Masseanschluss des elektrischen Systems. Alle elektrisch leitfähigen Teile, wie z. B. der Rumpf des Flugzeugs, die Flügel, die Leitwerke, die Klappen, Fahrwerk, Triebwerksverkleidungen etc., müssen mit Masseanschlussflächen versehen werden.

Bei der Aufbringung des Oberflächenschutzes auf die elektrisch leitfähigen Teile werden die für die Montage der Masseverbindungen vorgesehenen Bereiche der Oberfläche mit einer Aluminiumfolie vor der Aufbringung des Oberflächenschutzes geschützt. Nach dem Aufbringen des Oberflächenschutzes wird die Schutzfolie entfernt und der Masseanschluss, nach einer Reinigung des Untergrundes, mittels eines Anschlussschuhes und Verbindungskabels hergestellt. Dabei soll ein möglichst direkter Kontakt zwischen dem Anschlussschuh und der leitenden Oberfläche erfolgen. Wenn während der Aufbringung des Oberflächenschutzes eine elektrisch nicht-leitfähige Schicht, wie Anodisierung oder Farbe, unter die Schutzfolie gelangt, muss diese durch eine schnell rotierende Bürste oder eine Schleifscheibe nachträglich entfernt werden. Dabei handelt es sich um eine zeitaufwändige und damit unwirtschaftliche Methode. Neben dem hohen Aufwand schlägt sich diese Methode in der Qualität, d. h. in der Menge des Materials, welches abgetragen wurde, und in einer schlechten Oberflächengüte (Rauheit) nieder, die der elektrischen Leitfähigkeit abträglich ist.

Es ist eine Aufgabe der vorliegenden Erfindung, ein verbessertes Verfahren zum Entfernen von einer Oberflächenbeschichtung auf einer Oberfläche anzugeben.

Gemäß einem Ausführungsbeispiel der vorliegenden Erfindung, wie in Anspruch 1 angegeben, wird ein Verfahren zum Entfernen von einer Oberflächenbeschichtung, in einem zu entschichtenden Bereich auf einer Oberfläche, mittels eines Laserstrahls angegeben. Das Verfahren umfasst die Schritte des Positionierens und Ausrichtens des Laserstrahls auf den zu reinigenden Bereich und Pulsen des Laserstrahls.

In vorteilhafter Art und Weise wird der Laser nur auf den Bereich angesetzt, den es zu entschichten gilt. Aufgrund der Kohärenzeigenschaften des Lasers und des im Wesentlichen parallelen Strahlenverlaufs des Laserstrahls kann dadurch ein Bereich auf einer Oberfläche mit einer hohen Genauigkeit abgefahren werden. Der pulsierende Betrieb des Lasers kann es ermöglichen, dass die Energie des Lasers nur während einer kurzen Zeit einwirkt und keine unerwünschte Temperaturveränderung des Grundmaterials verursacht. Diese kurze Zeit kann ausreichen, um die Oberflächenbeschichtung zu verdampfen, ohne dabei das darunter liegende Trägermaterial zu sehr zu erwärmen. Somit können negative Auswirkungen durch Hitzeeinwirkungen auf das Trägermaterial vermieden werden.

Gemäß einem Ausführungsbeispiel der vorliegenden Erfindung, wie in Anspruch 2 angegeben, besteht die Möglichkeit, dass die Wellenlänge des Laserstrahls an ein Absorptionsverhalten der Oberflächenbeschichtung angepasst wird.

Vorteilhaft kann durch die Anpassung der Wellenlänge an das Absorptionsverhalten der Oberflächenbeschichtung die Wirkung des Laserstrahls auf die Oberflächenbeschichtung verstärkt werden und die reflektierende Eigenschaft des metallischen Grundmaterials genutzt werden. Material kann nur Energie, die einer bestimmten Wellenlänge entspricht absorbieren. Da die Energie, die ein Laserstrahl überträgt von der Wellenlänge abhängt, kann durch Anpassung dieser Wellenlänge an das Absorptionsverhalten eines Materials erreicht werden, dass sich die Wirkung auf das zu entschichtende Material beschränkt. Das bedeutet, dass das Material der Oberflächenbeschichtung die per Laser eingebrachte Energie aufnimmt, der Grundwerkstoff jedoch die Laserstrahlung reflektiert und somit nur einen sehr geringen Absorptionsgrad aufweist.

Gemäß weiteren Ausführungsbeispielen der vorliegenden Erfindung, wie in den Ansprüchen 3 und 4 angegeben, wird ein Verfahren angegeben, bei dem ein Nd:YAG-Laser bzw. ein TEA CO₂-Laser eingesetzt werden. In vorteilhafter Art und Weise besitzen ein Nd:YAG-Laser bzw. ein TEA CO₂-Laser Wellenlängen, die mit einer im Flugzeugbau häufig vorkommenden Oberflächenbeschichtung gut wirken können.

Gemäß einem weiteren Ausführungsbeispiel der vorliegenden Erfindung, wie in Anspruch 5 angegeben, umfasst das Verfahren ferner den Schritt des Verdampfens der Oberflächenbeschichtung. Durch das Verdampfen kann sich die Oberflächenbeschichtung von der Oberfläche, auf der sie haftet, trennen und in der Umgebungsluft lösen, wodurch die Oberfläche entschichtet wird. Da die Verunreinigung in der Luft gelöst ist, kann sie beispielsweise durch Absaugen leicht eingefangen werden.

Gemäß einem weiteren Ausführungsbeispiel der vorliegenden Erfindung, wie in Anspruch 6 angegeben, wird die verdampfte Oberflächenbeschichtung abgesaugt. Durch das Absaugen der verdampften Oberflächenbeschichtung kann die Umgebungsluft während der Bearbeitung der Teile besser gereinigt werden. Beispielsweise können dadurch Gesundheitsvorschriften am Arbeitsplatz besser erfüllt werden.

Gemäß einem weiteren Ausführungsbeispiel der vorliegenden Erfindung, wie in Anspruch 7 angegeben, kann das Verfahren zur Herstellung von Masseanschlussflächen an Flugzeugbauteilen verwendet werden. Da Masseverbindungen meist über das direkte Kontaktieren zweier Metalle erzielt werden und die Kontakteigenschaften umso besser sind, je weniger Verunreinigungen sich zwischen ihnen befinden und umso größer die direkt kontaktierende Oberfläche des Masseanschlusses ist, ist es vorteilhaft, vollständig entschichtete Metalloberflächen mit einer geringen Oberflächenrauheit vorliegend zu haben.

Gemäß einem weiteren Ausführungsbeispiel der vorliegenden Erfindung, wie in Anspruch 8 angegeben, kann das Verfahren auf eine Oberfläche aus Aluminiumlegierung angewendet werden. In vorteilhafter Art und Weise wird die Aluminiumlegierung bei dieser Behandlung mittels eines Lasers nicht in Mitleidenschaft gezogen.

Gemäß einem weiteren Ausführungsbeispiel der vorliegenden Erfindung, wie in Anspruch 9 angegeben, kann das Verfahren bei einer Oberflächenbeschichtung eingesetzt werden. Die Oberflächenbeschichtung kann eine Anodisierschicht, eine Primerschicht oder eine Topcoatschicht sein oder eine beliebige Schichtung dieser Schichten. Eine Anodisierschicht oder Anodisierungsschicht kann auf Basis von Chromsäure oder Schwefelsäure gebildet worden sein. Eine Primerschicht kann eine Harzbasisbeschichtung sein. Eine Topcoat-FarbSchicht basiert meist auf einem Polyurethan-, Epoxyd- oder Pulverlack.

Vorteilhaft kommt dabei zum Tragen, dass diese Beschichtung einen hohen Absorptionsgrad für die Wellenlänge des Lasers besitzt. D. h. von ihr wird viel Energie aufgenommen, wodurch sich das Material von der Oberfläche entfernt.

Gemäß einem weiteren Ausführungsbeispiel der vorliegenden Erfindung wird in Anspruch 10 eine Vorrichtung zur Entfernung von einer Oberflächenbeschichtung in einem Bereich auf einer Oberfläche angegeben. Die Vorrichtung umfasst dabei einen Laser, eine Laserstrahloptik und eine Steuervorrichtung für einen Laserstrahl. Der Laser erzeugt einen Laserstrahl, den die Laserstrahloptik in einer geometrisch bestimmten Art und Weise über die Bauteiloberfläche führt. Die Steuervorrichtung ist ausgestaltet, um eine Bewegung des Laserstrahls über den zu entschichtenden Bereich zu führen.

In vorteilhafter Art und Weise kann mit dieser Vorrichtung ein Laserstrahl bereitgestellt werden und der Laserstrahl kann auf einen zu entschichtenden Bereich gelenkt werden.

Gemäß einem weiteren Ausführungsbeispiel der vorliegenden Erfindung, wie in Anspruch 11 angegeben, umfasst die Vorrichtung ferner eine Faserkopplung. Mit Hilfe der Faserkopplung kann ein mobiles Arbeiten ermöglicht werden. Eine mit dem Laser verbundene Glasfaser kann den, von dem Laser erzeugten Laserstrahl, an die zu bearbeitende Fläche transportieren. Vorteilhaft ist dabei, dass die Vorrichtung an Stellen eingesetzt werden kann, an denen immobile Vorrichtungen nicht eingesetzt werden könnten oder den Aufwand für die Bearbeitung durch zusätzliche Auf- und Abbaumaßnahmen erhöhen würden. Die Faserkopplung begünstigt außerdem die zielgenaue Positionierung des Laserstrahls auf dem zu reinigenden Bereich.

Gemäß einem weiteren Ausführungsbeispiel der vorliegenden Erfindung, wie in Anspruch 12 angegeben, ist der Laser ausgestaltet, mit einer Leistung im Bereich von 50 W bis 4 kW, insbesondere mit einer Leistung im Bereich von 100 W bis 4 kW und weiter insbesondere mit einer Leistung im Bereich von 120 W bis 4 kW zu arbeiten. Dadurch kann der Laser energiesparend und damit wirtschaftlich eingesetzt werden.

Gemäß einem weiteren Ausführungsbeispiel der vorliegenden Erfindung, wie in Anspruch 13 angegeben, umfasst die Vorrichtung ferner eine Wellenlängenanpassungsvorrichtung.

Durch die Anpassung der Wellenlänge an das Absorptionsverhalten einer Oberflächenbeschichtung kann bewirkt werden, dass die Oberflächenbeschichtung in dem von dem Laser überschrittenen Bereich, die von dem Laserstrahl übertragene Energie absorbiert, wodurch sie von der Oberfläche gelöst wird. In vorteilhafter Art und Weise kann dadurch die Beschichtung von der Oberfläche entfernt werden.

Gemäß einem weiteren Ausführungsbeispiel der vorliegenden Erfindung, wie in Anspruch 14 angegeben, wird eine Verwendung einer Vorrichtung zur Entfernung von einer Oberflächenbeschichtung zur Entschichtung einer Masseanschlussfläche eines Flugzeugbauteils angegeben.

Im Folgenden werden Ausführungsbeispiele der vorliegenden Erfindung mit Verweis auf die folgenden Figuren detailliert beschrieben.

Fig. 1 zeigt eine schematische Skizze einer Masseanschlussfläche verbunden mit einem elektrischen Kabel.

Fig. 2 zeigt eine dreidimensionale Darstellung einer Vorrichtung zur Reinigung von Masseanschlussflächen gemäß der vorliegenden Erfindung.

Fig. 3 zeigt eine zweidimensionale Draufsicht auf eine gemäß der vorliegenden Erfindung gereinigte Masseanschlussfläche.

Fig. 4 zeigt eine zweidimensionale Schnittdarstellung durch eine Masseanschlussfläche.

Fig. 5 zeigt eine schematisierte Darstellung der Laserführung zur Reinigung einer verunreinigten Oberfläche gemäß einem Ausführungsbeispiel der vorliegenden Erfindung.

Fig. 6 und Fig. 7 zeigen gereinigte Flächen bei großem bzw. kleinem Spurabstand eines über eine Fläche geführten Laserstrahls.

Fig. 8 zeigt ein Flussdiagramm eines Verfahrens zum Entfernen von einer Oberflächenbeschichtung in einem zu entschichtenden Bereich auf einer Oberfläche gemäß der vorliegenden Erfindung.

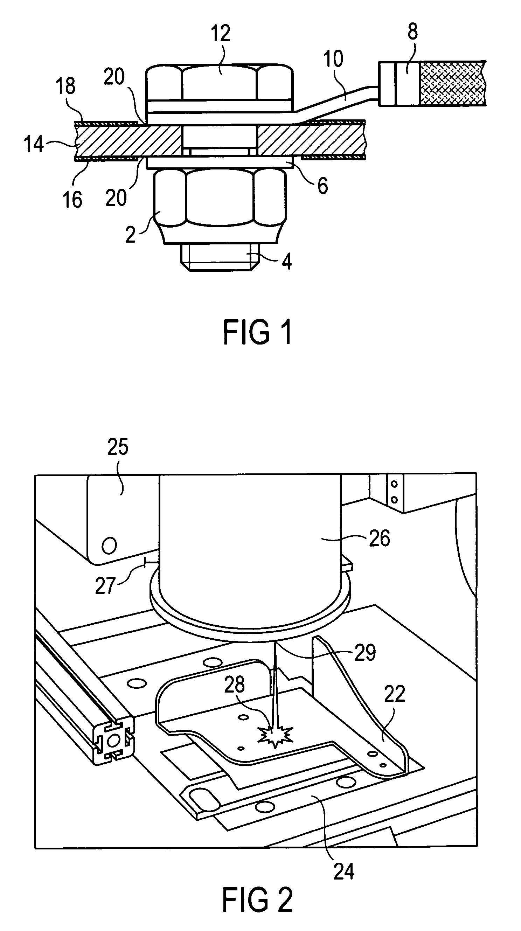

Fig. 1 zeigt eine schematische Skizze einer Masseanschlussfläche verbunden mit einem elektrischen Kabel. In dem Bild ist ein leitfähiges Grundmaterial 14 das plattiert oder unplattiert sein kann zu sehen. Bauelemente aus einem leitfähigen Grundmaterial 14, beispielsweise einer Aluminiumlegierung wie A12024, werden im Flugzeugbau häufig eingesetzt. Auf diesem leitfähigen Grundmaterial 14 ist ein nicht leitendes Oberflächenschutzsystem 18 aufgebracht. Dieses nicht leitende Oberflächenschutzsystem 18 schützt das Grundmaterial 14 vor äußeren Einflüssen, um beispielsweise die Bildung von Korrosion zu hemmen. Das nicht leitende Oberflächenschutzsystem 18 kann aus einer Anodisierschicht auf Basis Chromsäure oder Schwefelsäure, aus Primer und aus Topcoat Farbe gebildet werden, wobei nicht zwingend ist, dass immer alle Schichten gleichzeitig zum Einsatz kommen.

Beispielhaft zeigt Fig. 1 den Masseanschluss eines Teils eines Flugzeuges. Die leitfähige Oberfläche 20 des Teils ist mittels Verbindungskabel 8 und Anschlussschuh 10 mit anderen Teilen des Flugzeugs verbunden. Dazu ist in dem Grundmaterial, das meistens ein Blech ist, ein Loch vorgesehen, in das eine Schraube 4 gesteckt wird. Mittels Schraubenkopf 12 und einer Mutter 2 werden der Anschlussschuh 10 und eine Beilagscheibe 6 gegen die Oberfläche des Grundmaterials 14 gedrückt. Da es bei der Verbindung des Anschlussschuhes 10 bzw. der Beilagscheibe 6 mit der leitenden Oberfläche 20 des Grundmaterials auf eine möglichst gute Kontaktfläche ankommt, muss der Bereich, in dem der Anschlussschuh 10 bzw. die Beilagscheibe 6 die leitende Oberfläche 20 berührt, möglichst frei von nicht-leitfahigen Materialien sein.

Nicht-leitfähige Materialien können das Oberflächenschutzsystems 18 und auch Verunreinigungen sein. Bei der Auftragung des Oberflächenschutzsystems 18 wird beim herkömmlichen Entschichtungsprozess durch Maskierung der Bereich, in dem der Anschlussschuh 10 die leitende Oberfläche 20 des Grundmaterials 14 berühren soll, abgedeckt, um ihn vor dem ungewollten Auftragen des Oberflächenschutzsystem 18 zu schützen. Allerdings gelangen trotzdem Bestandteile des Oberflächenschutzsystems 18 in den Bereich der Auflage des Anschlussschuhes 10 auf der leitenden Oberfläche 20. Daher wird dieser Bereich vor der Anbringung der Schraube 4 von den Verunreinigungen gereinigt. Mit der Reinigung soll die blanke Oberfläche 20, die im Wesentlichen eine spiegelnd reflektierende metallische Oberfläche ist, freigelegt werden. Deshalb wird der Entschichtungsprozess auch als Anspiegelungsprozess bezeichnet.

Fig. 2 zeigt eine dreidimensionale Darstellung einer Vorrichtung zur Entschichtung von Masseanschlussflächen gemäß der vorliegenden Erfindung. Die Figur zeigt eine Anordnung eines Lasers 26 an einer Steuereinrichtung 25. Bei dem Laser 26 kann es sich beispielsweise um einen TEA CO₂-Laser oder einen Nd:YAG (neodym:Yttrium Aluminium Granat)-Laser handeln. Wird ein Nd:YAG-Laser eingesetzt, besteht die Möglichkeit mit einer Faserkopplung den Wirkungsbereich des Lasers 28 zu beeinflussen. Bei der Faserkopplung wird eine Lichtleiterfaser an den Laser 26 angebracht, so dass der Laserstrahl 28 über den Lichtwellenleiter an die zu bearbeitende Stelle geführt werden kann.

Ein zu bearbeitendes Bauteil 22 wird auf einem Werkstückträger 24, unter dem Laser 26 positioniert. Der Laser 26 ist an der Steuereinrichtung 25 befestigt, so dass er horizontal über das Bauteil 22 bewegt werden kann. Beispielsweise programmgesteuert kann der Laser mittels der Steuereinrichtung 25 den Bereich, in dem Schichten entfernt werden sollen, abfahren. Darüber hinaus besteht auch die Möglichkeit u.a. den Laserstrahl über gesteuerte Spiegel an den Einsatzbereich zu führen. Es ist auch denkbar, dass die Anordnung in einem Hand-Held-System integriert wird und so für den mobilen Einsatz zu verwenden ist.

Während der Laser 26 den zu bearbeitenden Bereich abfährt, erzeugt er einen gepulsten Laserstrahl 28. Die Wellenlänge des Laserstrahls 28 ist dabei so gewählt, dass sie dem Absorptionsverhalten einer zu entfernenden Beschichtung auf der Oberfläche des Bauteils 22 entspricht. Mit Hilfe eines spiegelgesteuerten Objektivs 29 kann der Laserstrahls 28 zusätzlich auf die zu bearbeitende Fläche der Oberflächenbeschichtung angepasst werden. Es ist auch denkbar, den Laserstrahl 28 zur Reinigung von einer Bauteiloberfläche zu verwenden.

Trifft der Laserstrahl 28 auf die Oberflächenbeschichtung, so nimmt diese aufgrund ihres Absorptionsverhaltens die von dem Laser übertragene Energie auf, was dazu führt, dass die Oberflächenbeschichtung verdampft und von der Oberfläche des Bauteils 22 gelöst wird. Bei dem Bauteil 22 handelt es sich um ein leitfähiges Grundmaterial, beispielsweise eine Aluminiumlegierung. Die zu entfernende Beschichtung ist meist Bestandteile eines nicht leitenden Oberflächenschutzsystems. Da der Laserstrahl 28 gepulst eingesetzt wird, kann erreicht werden, dass der Laserstrahl nur mit der Verunreinigung wirkt, ohne die darunter liegende leitfähige und oftmals plattierte Grundschicht 20 zu beschädigen.

Die Anordnung in Fig. 2 zeigt eine Vorrichtung zur Bearbeitung von kleineren bis mittleren Bauteilen 22. Mit entsprechend größeren Dimensionen und Leistungsniveaus des Lasers ist die Anlage auch für größere Bauteile und die Behandlung von größeren Flächen einsetzbar.

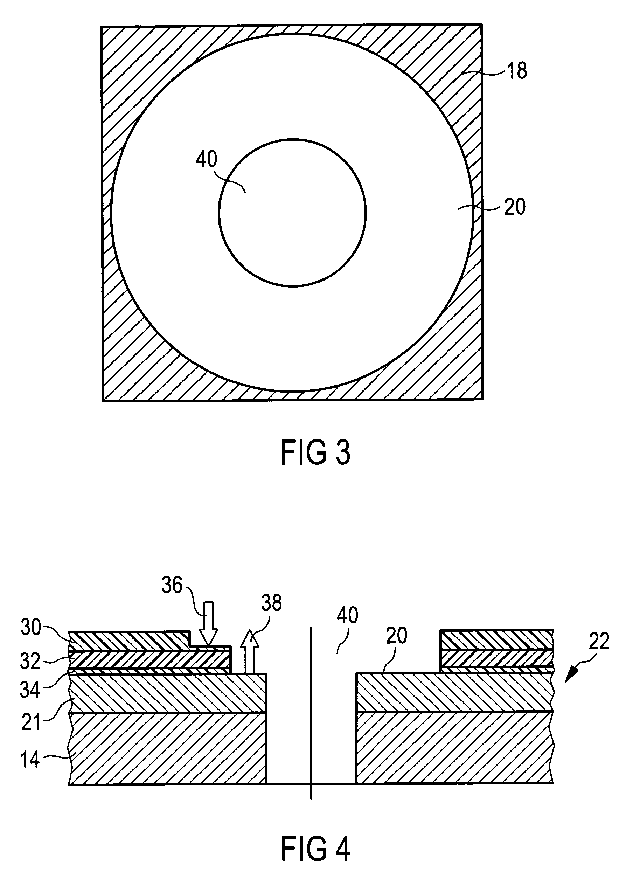

Fig. 3 zeigt eine zweidimensionale Draufsicht auf eine gemäß der vorliegenden Erfindung entschichtete Masseanschlussfläche. Das Bild zeigt den Ausschnitt einer Bauteiloberfläche, an der die Anbringung eines Masseanschlusses vorgesehen ist. Zu sehen ist der Bereich 18, in dem ein nicht leitendes Oberflächenschutzsystem, wie eine Anodisierschicht auf Basis Chromsäure oder Schwefelsäure, Primer oder Topcoat-Farbe, auf der leitenden Oberfläche 20 aufgebracht ist. Kreisförmig um das Loch 40, in das die Befestigungsschraube 4 für den Anschlussschuh 10 eingeführt wird, ist eine kreisförmige helle Fläche 20 zu sehen. In diesem Bereich wurde die Oberflächenbeschichtung, mittels der Laseranspiegelungstechnik entfernt. Es ist zu sehen, dass die gleichmäßige, glatte Oberflächenstruktur der leitenden Oberfläche 20 durch das Entschichtungsverfahren nicht beeinträchtigt worden ist. Außerdem ist zu sehen, dass zwischen dem nicht leitenden Oberflächenschutzsystem 18 und der leitenden Oberfläche 20 ein sehr scharfer Übergang stattfindet. Ein solcher scharfer Übergang ist möglich, da sich ein Laserstrahl sehr genau in dem zu bearbeitenden Bereich positionieren lässt.

Fig. 4 zeigt eine zweidimensionale Schnittdarstellung durch eine Masseanschlussfläche. Die Figur zeigt den schichtweisen Aufbau eines Bauteils 22, wie beispielsweise Rumpfbauteile eines Flugzeugs. Das Bauteil 22 besteht aus einem leitfähigen Grundmaterial 14, das mit einer leitfähigen Plattierung 21 überzogen ist. Auf der Plattierung 21 ist beispielsweise zum Schutz vor Korrosion ein nicht leitendes Oberflächenschutzsystem 18 aufgebracht. Dieses nicht leitende Oberflächenschutzsystem 18 setzt sich wiederum aus mehreren Schichten zusammen. Direkt auf der Plattierung 21 ist die Anodisierschicht 34, die entweder aus Chromsäure (CAA) oder aus Schwefelsäure (SAA) gebildet wird, aufgebracht. Auf der Anodisierschicht 34 ist der Primer 32 aufgetragen. Auf dem Primer 32 befindet sich schließlich als oberste Schutzschicht die Topcoat-Farbe 30.

Es ist gewünscht, dass die Oberfläche 20 der leitfähigen Plattierung 21 symmetrisch um das Loch 40, frei von Schichten zugänglich ist. In das Loch 40 wird die Schraube 4 zur Befestigung des Anschlussschuhes 10 eingebracht. Elektrisch nicht-leitende Oberflächenschutzsysteme 30, 32, 34 in den freizuhaltenden Bereich werden entfernt. Dazu werden die Schichten mittels eines Laserstrahls 36, dessen Wellenlänge an das Absorptionsverhalten der Schichten angepasst ist, Energie zugeführt. Wegen der Abstimmung der Wellenlänge des Laserstrahls 36 auf das Absorptionsverhalten der Beschichtung wird diese verdampft und löst sich im Bereich der Einwirkung des Laserstrahls 36 von der leitfähigen Oberfläche 20. Reflektionen 38 des Laserstrahls 36 an der leitfähigen Oberfläche 20 begünstigen den Ablöseprozess. Deshalb ist es von Vorteil, wenn für die Plattierung 21 oder das Grundmaterial ein Material mit einem hohen Reflektionsanteil für die Laserstrahlung eingesetzt wird, damit nur eine geringe thermische Energie in das Bauteil eingebracht wird. Wenn die leitfähige Oberfläche 20 der Plattierungsschicht freigelegt worden ist, kann ein guter Kontakt zwischen dem Kabelschuh 10 und der leitfähigen Oberfläche 20 bzw. dem Grundmaterial 14 hergestellt werden. Dadurch kann eine gute Masseableitung stattfinden.

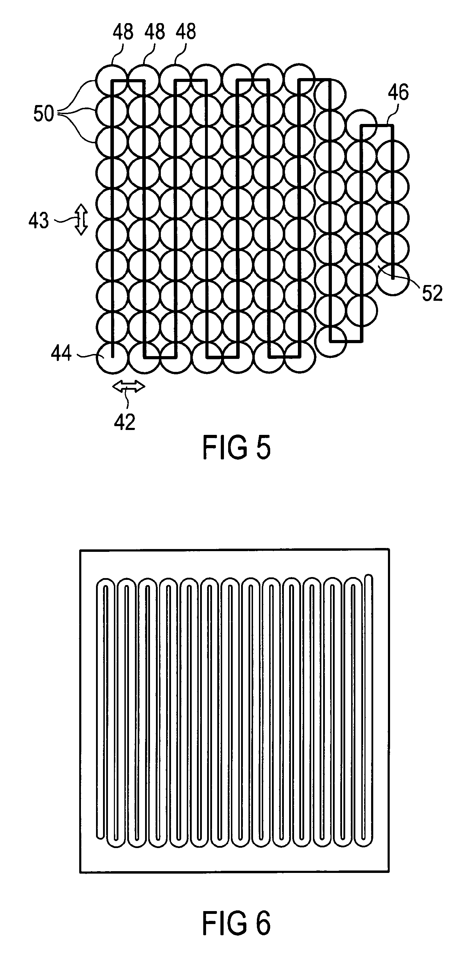

Fig. 5 zeigt eine schematisierte Darstellung der Laserführung zur Entschichtung einer Oberfläche gemäß einem Ausführungsbeispiel der vorliegenden Erfindung. Mit einem Laserstrahl 28 lassen sich auf einem Material Brennflecken 44 erzeugen. Der Durchmesser der Brennflecken entspricht dem Durchmesser des Laserstrahls 28 und kann aufgrund der hohen Parallelität und Fokussierbarkeit eines Laserstrahls 28 sehr klein gewählt werden. Trifft dieser Laserstrahl 28 auf ein Material mit einem ausreichenden Absorptionsvermögen für die Wellenlänge des Laserstrahls 28, wird in der Größe des Brennflecks 44 das Material verdampft. Dabei tritt die darunter liegende Oberfläche 20 zum Vorschein.

Mit Hilfe vieler aneinander gereihter Brennflecken 44 ist es möglich, Konturen von Bereichen nachzubilden. Beispielsweise kann eine solche Kontur eine Masseanschlussfläche sein. Fig. 5 zeigt mehrere aneinander gereihte Brennflecken, die eine Kontur beschreiben. Auf der linken Seite der Fig. 5 ist gezeigt, wie mit Hilfe mehrerer aneinander gereihter Brennflecken Ecken ausgebildet werden können. Die rechte Seite der Fig. 5 zeigt hingegen, wie mit diesem Verfahren ebenfalls Rundungen ausgebildet werden können.

Um zu gewährleisten, dass jede Stelle der zu reinigenden Kontur angefahren wird, wird die Kontur in Spalten 48 und Zeilen 50 zerlegt. Die gewählte Breite 42 der Spalten 48 bzw. die Höhe 43 der Zeilen 50 hängt von der gewünschten Reinigungsintensität ab. Das Bild zeigt eine Wahl der Spaltenbreite 42 und der Zeilenhöhe 43, so dass es zu keiner Überlappung der Brennflecken 44 kommt. Dadurch gibt es Bereiche 52, die von dem Laserstrahl 28 nicht erfasst werden. Die Breite 42 der Spalten 48 bzw. die Höhe 43 der Zeilen 50 kann aber auch entsprechend angepasst werden, dass es zu einer Überlagerung der Brennflecken 44 und somit zu einer Minimierung der nicht abgedeckten Bereiche 52 kommt.

Den Verlauf einer beispielhaften Laserführung über den zu bearbeitenden Bereich zeigt Spur 46. Beginnend von einem Startpunkt wird bei der Überfahrt über die zu bearbeitende Fläche der Laserstrahl zunächst in einer Spalte 48 zeilenweise versetzt, bis der Rand der Kontur erreicht wird. Danach wird der Strahl in die daneben liegende Spalte geführt und wird wiederum zeilenweise, allerdings in die andere Richtung, bis zur Konturkante versetzt. Dadurch ergibt sich beim Überfahren der zu bearbeitenden Fläche ein rechteckförmiger Spurverlauf 46, der von den Konturrändern des zu bearbeitenden Bereichs begrenzt wird. Durch die Variation der Spurweite 42, der Wahl des Abstandes 43 zwischen den Zeilen 50, der Anzahl der Überfahrten und der Überfahrtsrichtung können Besonderheiten des abzutragenden Materials berücksichtigt und das Abtragergebnis beeinflusst werden. Eine übliche Pulsdauer des Laserstrahls liegt bei etwa 100-150 Nanosekunden, wodurch die Bearbeitung einer 15 mm² großen Fläche etwa eine Sekunde beträgt.

Fig. 6 zeigt eine gereinigte Fläche bei einem großen Spurabstand 42 eines über eine Fläche geführten Laserstrahls. Die Figur zeigt einen quadratischen Bereich, bei dem deutlich der Spurverlauf zu sehen ist. Dies rührt daher, da der Spurabstand 42 größer als der Durchmesser eines Brennflecks 44 gewählt wurde. Somit entsteht zwischen den einzelnen Spuren der Brennflecken ein Materialüberbleib 52. Die Entschichtung ist hierbei nicht intensiv erfolgt.

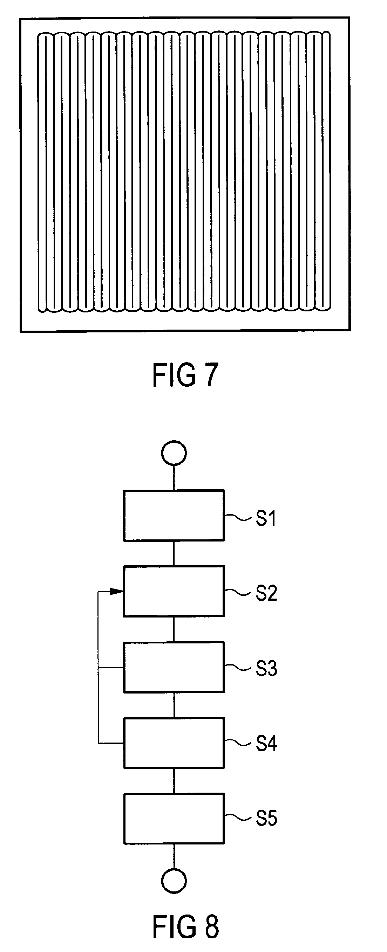

Fig. 7 zeigt eine gereinigte Fläche bei kleinem Spurabstand 42 eines über eine Fläche geführten Laserstrahls. Wie in Fig. 6 ist ein quadratischer Bereich zu sehen, in dem ein Laserstrahl 28 eingesetzt wurde. Aufgrund der Wahl eines geringen Spurabstands 42 sind auf der gereinigten Oberfläche im Wesentlichen Schichten entfernt. Es handelt sich bei der Darstellung in Fig. 7 um eine intensiv gereinigte Fläche.

Fig. 8 zeigt ein Flussdiagramm eines Verfahrens zum Entfernen von einer Oberflächenbeschichtung in einem zu entschichtenden Bereich auf einer Oberfläche gemäß der vorliegenden Erfindung. Das Flussdiagramm zeigt, dass zunächst in einem Schritt S 1 ein Anpassen der Wellenlänge des Laserstrahls 28 an das Absorptionsverhalten einer Oberflächenbeschichtung erfolgt, um eine Beschädigung des Grundmaterials zu vermeiden. Durch diese Anpassung kann erreicht werden, dass der gewünschte Ablöseprozess nur die Oberflächenbeschichtung von der Oberfläche löst. Danach wird im Schritt S2 der Laserstrahl 28 auf den zu reinigenden Bereich ausgerichtet. Sobald die gewünschte Position erreicht wird, wird ein kurzer Puls des Laserstrahls 28 in Schritt S3 erzeugt. Durch diesen Puls wird Energie von dem Laserstrahl 28 auf den Brennfleck 44, der gerade von dem Laserstrahl 28 abgedeckt wird, übertragen. Befinden sich in dem Bereich des Brennflecks 44 Verunreinigungen, die die vom Laserstrahl 28 bereitgestellte Energie absorbieren können, so verdampft die Oberflächenbeschichtung, wie in Schritt S4 dargestellt. Der Vorgang des Ausrichtens des Laserstrahls, des Pulsens und des Verdampfens wird solange wiederholt bis der gesamte zu bearbeitende Bereich überfahren worden ist. Die verdampfte und nun in der Luft gelöste Oberflächenbeschichtung kann danach, wie in Schritt S5 dargestellt, abgesaugt werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Entfernen einer Oberflächenbeschichtung in einem zu entschichtenden Bereich auf einer Bauteiloberfläche (20), mittels eines Laserstrahls (28), umfassend folgende Schritte:
Positionieren und Ausrichten des Laserstrahls (28) auf den zu reinigenden Bereich; und
Pulsen des Laserstrahls (28).

2. Verfahren nach Anspruch 1, ferner umfassend den Schritt:
Anpassen einer Wellenlänge des Laserstrahls (28) an ein Absorptionsverhalten der Oberflächenbeschichtung (30, 32, 34).

3. Verfahren nach einem der Ansprüche 1 bis 2, wobei ein Nd:YAG-Laser eingesetzt wird.

4. Verfahren nach einem der Ansprüche 1 bis 2, wobei ein TEA CO₂-Laser eingesetzt wird.

5. Verfahren nach einem der Ansprüche 1 bis 4, ferner umfassend den Schritt:
Verdampfen der Oberflächenbeschichtung (30, 32, 34).

6. Verfahren nach einem der Ansprüche 1 bis 5, ferner umfassend den Schritt:
Absaugen der verdampften Oberflächenbeschichtung.

7. Verfahren nach einem der Ansprüche 1 bis 6 zur Herstellung von Masseanschlussflächen an Flugzeugbauteilen.

8. Verfahren nach einem der Ansprüche 1 bis 7,
wobei die Bauteiloberfläche aus einer Aluminiumlegierung besteht.

9. Verfahren nach einem der Ansprüche 1 bis 8,
wobei die Oberflächenbeschichtung (30, 32, 34) zumindest eine Schicht ausgewählt aus der folgenden Gruppe bestehend aus einer Anodisierschicht (34), einer Primerschicht (32) und einer Topcoatschicht (30) ist, wobei die Anodisierschicht (34) auf Basis von Chromsäure oder Schwefelsäure und die Topcoatschicht (32) auf der Basis von Polyurethan, Epoxyd oder Pulverlack ausgestaltet ist.

10. Vorrichtung zur Entfernung von einer Oberflächenbeschichtung (30, 32, 34) in einem Bereich auf einer Oberfläche (20), umfassend:
einen Laser (26);
eine Laserstrahloptik (29);
eine Steuervorrichtung (25);
wobei der Laser (26) ausgestaltet ist, einen Laserstrahl (28) zu erzeugen;
wobei die Laserstrahloptik (29) ausgestaltet ist, den Laserstrahl (28) in einer geometrisch bestimmten Art und Weise über die Bauteiloberfläche zu führen.

11. Vorrichtung nach Anspruch 10, ferner umfassend:
eine Faserkopplung;
wobei die Faserkopplung ausgestaltet ist, ein mobiles Arbeiten zu ermöglichen, wodurch eine mobile Vorrichtung angegeben wird.

12. Vorrichtung nach Anspruch 10,
wobei der Laser (28) ausgestaltet ist, mit einer Leistung im Bereich von 50 W bis 4 kW, insbesondere mit einer Leistung im Bereich von 100 W bis 4 kW und ferner insbesondere mit einer Leistung im Bereich von 120 W bis 4 kW zu arbeiten.

13. Vorrichtung nach Anspruch 10, ferner umfassend
eine Wellenlängenanpassungseinheit (27);
wobei die Wellenlängenanpassungseinheit (27) ausgestaltet ist, eine Wellenlänge des Laserstrahls (28) an ein Absorptionsverhalten der Oberflächenbeschichtung (30, 32, 34) anzupassen.

14. Verwendung einer Vorrichtung nach Anspruch 10 zum Entschichten einer Masseanschlussfläche eines Flugzeugbauteil.
